# EUROPÄISCHE PATENTSCHRIFT

(11) **EP 0 875 461 B1**
(45) Veröffentlichungstag und Bekanntmachung des Hinweises auf die Patenterteilung: **22.12.1999**
(21) Anmeldenummer: 97810477.6
(22) Anmeldetag: 14.07.1997
(51) Int. Cl.: B65D 1/32, B05B 11/04, G01F 11/26

(54) **Flasche, insbesondere zur Reinigung von WC-Schüsseln**
Bottle, especially for cleaning toilet bowls
Bouteille, en particulier pour le nettoyage des cuvettes de WC

(30) Priorität: 02.05.1997 CH 103897
(43) Veröffentlichungstag der Anmeldung: 04.11.1998
(73) Patentinhaber: SOPLAR SA, CH-9450 Altstätten (CH)
(72) Erfinder: Künz, Hans, 6971 Hard (AT)
(74) Vertreter: Riederer, Conrad A., Dr.

(56) Entgegenhaltungen:
- EP-A- 0 010 965
- DE-A- 3 531 568
- US-A- 2 728 491
- US-A- 4 418 843
- US-A- 4 600 130
- US-A- 4 640 441

## Beschreibung

Die Erfindung betrifft eine Flasche, insbesondere zur Reinigung von WC-Schüsseln, mit einem Flaschenkörper, einer ersten Oeffnung zum Füllen der Flasche, einer zweiten Oeffnung mit einem Ausgussteil, einem Dosierraum, einem einstückig mit dem Flaschenkörper ausgebildeten und zum Ausgussteil hinführenden Steigrohr, dessen unteres Ende mit dem Innern des Flaschenkörpers kommuniziert und in Nähe des Flaschenbodens angeordnet ist.

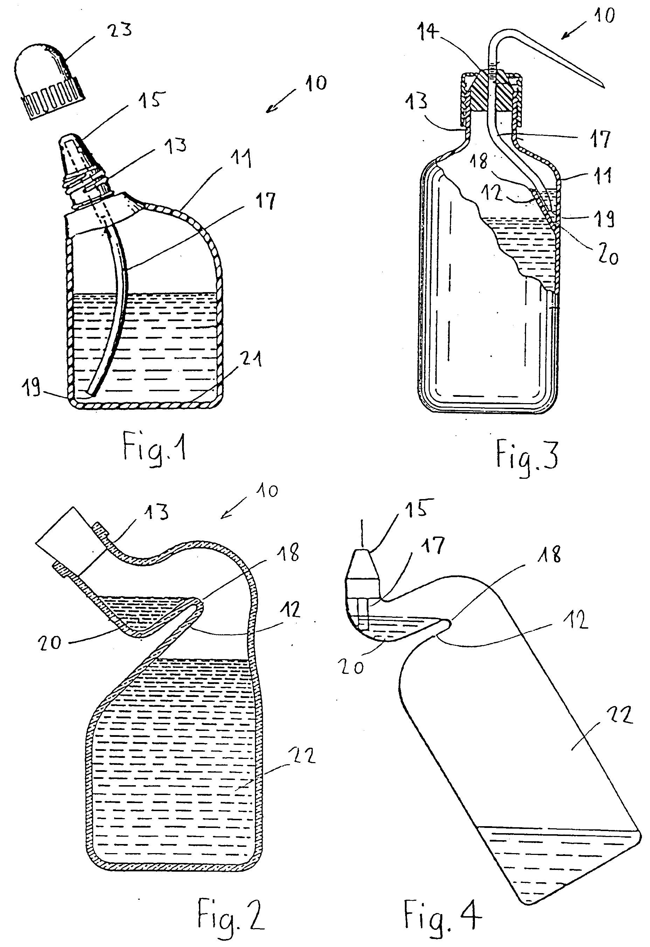

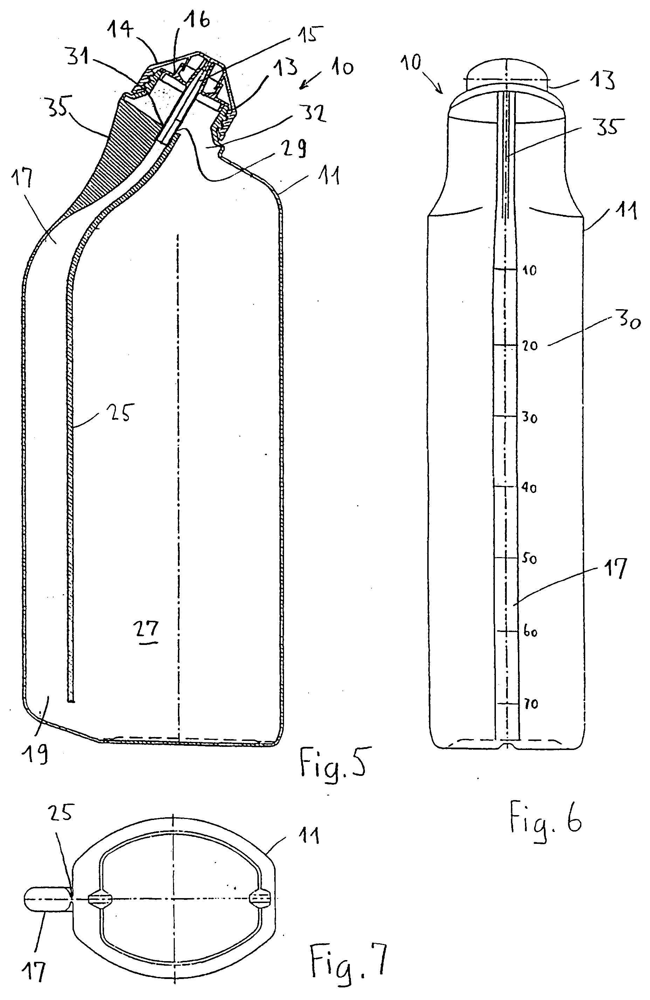

Die in Figur 1 dargestellte Quetschflasche 10 gemäss der amerikanischen Patentschrift 2,987,261 besitzt einen Flaschenkörper 11 aus flexiblem Kunststoff. Im Stutzen 13 des Flaschenkörpers 11 ist eine Ausgusstülle 15 angeordnet. Zu dieser führt ein Steigrohr 17, dessen unteres Ende 19 nahe der Peripherie des Flaschenbodens 21 angeordnet ist. Die Flasche 10 kann mit dem Schraubverschluss 23 verschlossen werden. Durch Druck auf die Flasche kann Flüssigkeit durch das Steigrohr 17 nach oben bewegt werden.

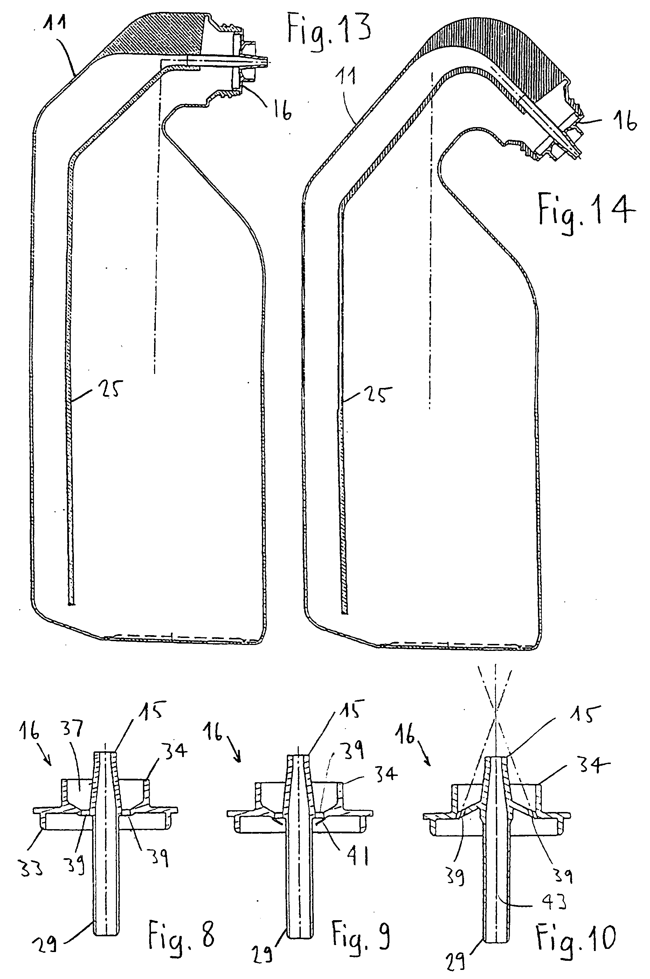

Die in Figur 2 dargestellte Flasche 10 gemäss der amerikanischen Patentschrift 570,759 stellt die Urform einer Dosierflasche dar. Sie besitzt im Innern eine aus der Flaschenwand herausgeformte doppelwandige, quer zur Längsmittelebene verlaufende Trennwand 12 mit Ueberlaufkante 18. Diese Trennwand 12 teilt das Flascheninnere in eine grosse Kammer 22 und eine kleine Kammer 20. Von dieser kleinen Kammer 20 ragt der als Ausguss dienende Flaschenhals 13 in einem spitzen Winkel zur Flaschenlängsachse ab. Durch Kippen der Flasche - wobei verhindert werden muss, dass weitere Flüssigkeit über die Ueberlaufkante 18 fliesst - kann die durch die kleine Kammer 20 dosierte Menge von Flüssigkeit entleert werden.

Die in Figur 3 dargestellte Flasche gemäss der amerikanischen Patentschrift 2,728,491 ist eine Quetschflasche, die als Dosierflasche ausgebildet ist. Sie besitzt ebenfalls eine Trennwand 12 mit Ueberlaufkante 18, welche im Flascheninneren eine kleine Kammer 20 bildet. Im Unterschied zur Flasche von Figur 2 führt ein Steigrohr 19 von der kleinen Kammer 20 nach oben durch den Zapfen 14. Das untere Ende 19 des Steigrohrs 17 ist im unteren Teil einer kleinen Kammer 20 angeordnet. Es ist somit möglich, durch Druck auf die Flasche eine dosierte Menge Flüssigkeit aus der kleinen Kammer 20 durch das Steigrohr 17 nach oben zu bewegen.

Die in Figur 4 dargestellte Quetschflasche 10 gemäss der schweizerischen Patentschrift 638 114 hat grundsätzlich die gleiche Ausgestaltung wie jene von Figur 2, besitzt jedoch wie die Flasche von Figur 3 ein Steigrohr 17, welches von der kleinen Kammer 20 wegführt. Um nach oben spritzen zu können, ist eine doppelwandige Trennwand 12 mit Ueberlaufkante 18 vorgesehen, über welche die zu verspritzende Flüssigkeit in die kleine Kammer 20 geführt wird, von welcher sie dann durch das Steigrohr 17 verspritzt werden kann. Diese Flasche hat jedoch den Nachteil, dass sie keine bzw. nur eine sehr ungenaue Dosierung erlaubt. Auch bietet das Abfüllen der Flasche gewisse Probleme. Insbesonders wird zum Abfüllen relativ viel Zeit benötigt.

Als weiteren, aber in der Zeichnung nicht mehr dargestellten Stand der Technik wäre noch die Quetschflasche gemäss der EP-A-0 753 355 zu erwähnen. Diese Quetschflasche funktioniert nach dem gleichen Prinzip wie die in Figur 3 dargestellte Flasche gemäss dem amerikanischen Patent 2,728,491, enthält jedoch eine Einbaute, welche die Dosierkammer bildet. Diese Flasche ist daher verhältnismässig teuer in der Herstellung.

Die US 4,600,130 A beschreibt den Nachteil bekannter Flaschen, die zum Ausgiessen von Flüssigkeit mit dem Ausguss nach unten gekehrt werden müssen und weist darauf hin, dass dies durch die Verwendung eines Steigrohrs vermieden werden kann. So wird eine Flasche, insbesondere Quetschflasche, beschrieben, welche mit einer ersten Oeffnung zum Füllen der Flasche und einer zweiten Oeffnung sowie einem parallel zum Flaschenboden angeordneten Ausgussteil versehen ist. Die Flasche weist ein einstückig mit dem Flaschenkörper ausgebildetes und zum Ausgussteil hin führendes Steigrohr auf, dessen unteres Ende in der Nähe des Flaschenbodens angeordnet ist. Wird die Flasche gequetscht, so wird Flüssigkeit durch das Steigrohr hinaufgepresst und fliesst durch einen nach unten gerichteten Ausguss aus. Je nachdem, wie stark die Flasche gequetscht wird, fliesst mehr oder weniger Flüssigkeit aus. Eine genaue Dosierung ist nicht möglich.

Die US 4,640,441 zeigt eine Flasche mit einem Steigrohr, das auf der Griffseite zum Ausguss führt. Zwischen dem Ende des Steigrohrs und dem Ausguss ist eine Dosierkammer angeordnet. Um zu dosieren, muss zuerst Flüssigkeit in die Dosierkammer gedrückt werden. Erst dann kann durch Kippen der Flasche die dosierte Menge durch den Ausguss ausgeleert werden.

Es ist daher Aufgabe der vorliegenden Erfindung, eine Flasche, insbesondere Quetschflasche, zu schaffen, welche eine Dosierung ermöglicht, sich gut handhaben lässt und relativ billig in der Herstellung ist.

Erfindungsgemäss wird dies bei einer Flasche der eingangs erwähnten Gattung dadurch erreicht, dass der Dosierraum durch das Steigrohr und eines eventuell daran anschliessenden Raums gebildet ist. Eine solche Flasche kann relativ billig als Quetschflasche im Extrusionsblasverfahren hergestellt werden. Da die Flasche kein separates Steigrohr benötigt, entfällt der Arbeitsaufwand zum Einsetzen eines Steigrohrs. Die Flasche ermöglicht ein Dosieren, auch wenn die Flasche praktisch voll ist. Beim Dosieren fliesst Flüssigkeit hindernisfrei vom Grund der Flasche direkt in das Steigrohr. Es ist kein Ueberlauf vorhanden. Die Flasche kann praktisch bis auf den letzten Tropfen geleert werden. Bei jeder Benützung der Flasche geht auch etwaig angesammelter Bodensatz weg. Es kann also nicht geschehen, dass sich Bodensatz lange ansammelt und dann, wenn die Flasche fast leer ist, die Ausgusstülle verstopft. Dank der zweiten Oeffnung der Flasche muss die Abfüllung der Flasche nicht durch das Steigrohr erfolgen, was mit erheblichen Problemen verbunden wäre.

Die Oeffnung des Flaschenkörpers kann so bemessen und angeordnet werden, dass sie ein problemloses und rasches Abfüllen der Flasche ermöglicht. Auch ist es möglich, den Flaschenhals seitlich oder mittig anzuordnen. Von besonderem Vorteil ist die Möglichkeit, das Volumen des Steigrohrs und eines gegebenenfalls daran angrenzenden Raums entsprechend der gewünschten Dosiermenge zu bemessen. Die Möglichkeit des Dosierens gestattet eine sparsame Verwendung des in der Flasche enthaltenen Füllguts. Das Hohlraumvolumen des Steigrohrs und des gegebenenfalls daran angrenzenden Raums kann derart bemessen sein, dass es z.B. der normalerweise benötigten Flüssigkeitsmenge entspricht. Vorteilhaft wird beim Steigrohr eine Gradierung vorgesehen, damit dieses zum Dosieren auch bloss bis zu einer Marke gefüllt werden kann. Zweckmässigerweise besteht das Steigrohr aus durchsichtigem oder durchscheinendem Material, wobei es durchaus auch möglich ist, dass Flaschenkörper aus einem anderen, z.B. undurchsichtigem oder andersfarbigem Material besteht. Die Herstellung der Flasche aus Kunststoff kann in ähnlicher Weise wie die Herstellung von Griffflaschen erfolgen, wobei jedoch statt ein Griff ein Steigrohr gebildet wird. Zweckmässigerweise ist das Steigrohr aussen am Flaschenkörper angeordnet, was eine besonders einfache Herstellung ermöglicht. Das Steigrohr kann über einen Steg mit dem Flaschenkörper verbunden bleiben. Das obere Ende des Steigrohrs kann die Oeffnung des Flaschenkörpers bilden.

Zweckmässigerweise weist der Flaschenkörper einen Stutzen auf, wobei die erste und/oder zweite Oeffnungen innerhalb des Stutzens oder am Fuss des Stutzens angeordnet sind. Dies ermöglicht es, mit dem Ausgussteil den Stutzen abzuschliessen. Der Ausgussteil kann dabei mittels eines rohrförmigen Ansatzes der Ausgusstülle diese mit dem oberen Ende des Steigrohrs verbinden. Zu diesem Zweck ist es zweckmässig, das obere Ende des Steigrohrs praktisch koaxial zum Stutzen anzuordnen.

Es ist aber auch möglich, die zweite Oeffnung praktisch koaxial zum Stutzen anzuordnen, in welchem Falle die erste Oeffnung neben die zweite Oeffnung zu liegen kommt. Die koaxiale Anordnung der zweiten Oeffnung erleichtert das Abfüllen der Flasche.

Eine vorteilhafte Ausbildung des Ausgussteils sieht vor, dass ein oberer Verschlussteil den Stutzen abschliesst und dass ein unterer Verschlussteil die zweite Oeffnung der Flasche abschliesst. Die Flasche kann dann so gestaltet sein, dass das obere Ende des Steigrohrs in einen Raum mündet, der nach dem Einsetzen des Ausgussteils zwischen dem oberen und dem unteren Verschlussteil angeordnet ist. Dieser Raum bildet dann einen Teil des Dosiervolumens.

Die nachfolgend erläuterten Ausführungsbeispiele lassen auf eine Dimensionierung schliessen, wie sie zur Verwendung mit Flüssigkeiten notwendig ist. Es ist jedoch dem Fachmann ersichtlich, dass die Erfindung bei entsprechender Dimensionierung von Steigrohr und Ausgusstülle auch für körniges Gut, wie z.B. Zucker, gewisse Chemikalien, usw., geeignet ist. Für solche Anwendungen kommen neben Kunststoff auch andere Materialien, z.B. Glas, als Flaschenmaterial in Betracht. Die Flasche wird aber vorzugsweise als Quetschflasche aus Kunststoff gebildet.

Stand der Technik und Ausführungsbeispiele der Erfindung werden in der Zeichnung illustriert. Die Ausführungsbeispiele werden nun unter Bezugnahme auf die Zeichnung näher erläutert. Es zeigt:
- Fig.1: eine Quetschflasche gemäss dem Stand der Technik nach der US-A-2,987,261,
- Fig.2: eine Dosierflasche gemäss dem Stand der Technik nach der US-A-570,759,
- Fig.3: eine Quetschflasche mit Dosiermöglichkeit gemäss dem Stand der Technik nach der US 2,728,491,
- Fig.4: eine Quetschflasche gemäss dem Stand der Technik nach der CH-A-638 114,
- Fig.5: einen Längsschnitt durch ein erstes Ausführungsbeispiel der erfindungsgemässen Quetschflasche,
- Fig.6: die Quetschflasche von Fig.5 von links betrachtet, jedoch ohne Ausgussteil und Deckel,
- Fig.7: die Quetschflasche von Fig.5 von unten betrachtet,
- Fig.8: ein erstes Ausführungsbeispiel eines Ausgussteils,
- Fig.9: ein zweites Ausführungsbeispiel eines Ausgussteils mit Rückschlagventil,
- Fig.10: ein drittes Ausführungsbeispiel eines Ausgussteils,
- Fig.11: die Quetschflasche von Fig.5 nach der Füllung,
- Fig.12: die Quetschflasche von Fig.8 im Gebrauch, wobei in einem Arbeitsgang eine dosierte Menge Flüssigkeit abgegeben wird,
- Fig.13: ein zweites Ausführungsbeispiel einer Quetschflasche mit einem in einem Winkel von etwa 90 Grad zur Flaschenachse angeordneten Stutzen,
- Fig.14: ein drittes Ausführungsbeispiel einer Quetschflasche mit einem schräg nach unten geneigten Stutzen und
- Fig.15: ein viertes Ausführungsbeispiel einer Quetschflasche mit einem weiteren Ausführungsbeispiel eines Ausgussteils.

Die in den Figuren 1 bis 4 dargestellten bekannten Flaschen gemäss dem Stand der Technik sind bereits einleitend beschrieben worden.

Bei dem in den Figuren 5 bis 7 dargestellten Ausführungsbeispiel besteht die vorzugsweise als Quetschflasche ausgebildete Flasche 10 im wesentlichen aus dem Flaschenkörper 11 und einen Ausgussteil 16 mit Ausgusstülle 15. Die Flasche kann mit einem Deckel 14 mit Gewinde oder Schnappverschluss verschlossen werden.Am Stutzen 13 kann ein Gewinde vorgesehen werden. Der Deckel 14 gewährleistet eine doppelte Abdichtung, indem Vorsprünge in den Ausgussteil eingreifen und ein Gewinde vorgesehen ist. Der Flaschenkörper 11 ist vorteilhaft ein im Blasverfahren hergestellter Hohlkörper aus flexiblem Kunststoff. Der Flaschenkörper 11 kann auch eine andere als die gezeigte Formgebung aufweisen. Die Form sollte aber so sein, dass die Quetschflasche 10 leicht mit einer Hand gehalten werden kann. Als zweckmässig erweist sich ein beispielsweise ovaler, ungefähr rechteckiger oder trapezförmiger Querschnitt, also Querschnitte, wie sie bereits bei im Handel erhältlichen Quetschflaschen zur WC-Schüsselreinigung Anwendung finden. Die Flasche kann aber auch als Griffflasche ausgestaltet sein. Auch eine Ausbildung als Faltflasche ist möglich.

Das Steigrohr 17 ist einstückig mit dem Flaschenkörper 11 ausgebildet und ist mit diesem durch einen Steg 25 verbunden. Das Steigrohr 17 ist zweckmässigerweise durchsichtig oder durchscheinend, wobei der Flaschenkörper 11 selbst aus einem anderen, z.B. undurchsichtigem oder farbigem Material bestehen kann, wie dies bereits von Flaschen mit Füllstandanzeigen bekannt ist. Das Steigrohr 17 kommuniziert mit dem unteren Ende 19 mit dem Inneren 27 des Flaschenkörpers 11 und erstreckt sich nach oben zum Ausgussteil 16 hin. Der Ausgussteil 16, von welchem vier Ausführungsformen in den Figuren 8 bis 10, bzw. 15 dargestellt sind, schliesst den Stutzen 13 ab. Das Volumen des Steigrohrs 17 ist entsprechend der gewünschten Dosiermenge bemessen. Je nach der gewünschten Dosiermenge kann also das Steigrohr 17 einen relativ kleinen oder einen relativ grossen Querschnitt aufweisen. Wie in Figur 6 gezeigt, ermöglicht eine Graduierung oder Skala 30 eine gewünschte Teilmenge abzumessen. Beim gezeigten Ausführungsbeispiel weist die Quetschflasche 10 zwei Oeffnungen 31,32 auf. Eine der Oeffnungen wird durch das obere Ende 31 des Steigrohrs 17 gebildet. In Fig. 5 ist das obere Ende des Steigrohrs 31 praktisch koaxial zum Stutzen 13 angeordnet. Die zweite Oeffnung 32 dient dem bequemen Füllen der Flasche. Mit der Bezugsziffer 35 ist eine Verstärkungsrippe bezeichnet.

Ein erstes Ausführungsbeispiel eines Ausgussteils 16 ist in Figur 8 dargestellt. Dieser Ausgussteil 16 besteht aus Kunststoff und besitzt einen Flansch 33, welcher den Stutzen 13 (Figur 5) abschliesst, und einen rohrförmigen Ansatz 29, der beim Aufsetzen des Ausgussteils 16 eine Verbindung mit dem Steigrohr 17 (Figur 5) schafft. Die Ausgusstülle 15 stellt somit eine Fortsetzung des Steigrohrs 17 dar. Konzentrisch zur Ausgusstülle 15 ist ein Tropfenfänger 34 angeordnet. Tropfen können aus der Rücklaufrille 37 durch eine oder mehrere kleine Oeffnungen 39 abfliessen. Durch diese Oeffnungen 39 kann auch Luft in den Flaschenkörper 11 einfliessen.

Die zweite Ausführungsform eines Ausgussteils gemäss Figur 9 unterscheidet sich von jener von Figur 8, dadurch dass an der jeweiligen kleinen Oeffnung 39 eine Klappe 41 vorgesehen ist, welche als Rückschlagventil wirkt. Die dritte Ausführungsform eines Ausgussteils gemäss Figur 10 unterscheidet sich von jener nach Figur 8, dass die kleinen Oeffnungen 39 in einen Winkel zur Achse 43 angeordnet sind. Aus den Oeffnungen austretende Luft- oder Flüssigkeitsstrahlen führen daher zu einer guten Verwirbelung der aus der Ausgusstülle 15 strömenden Flüssigkeitsstrahlen. Dies tritt in vermindertem Ausmass auch bei der Ausführungsform von Figur 8 ein.

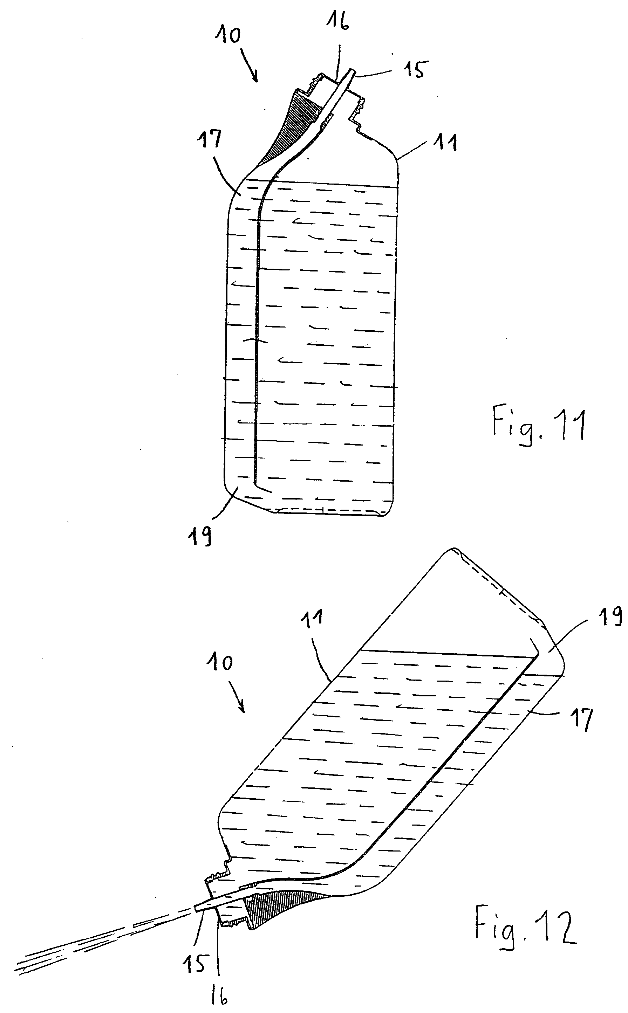

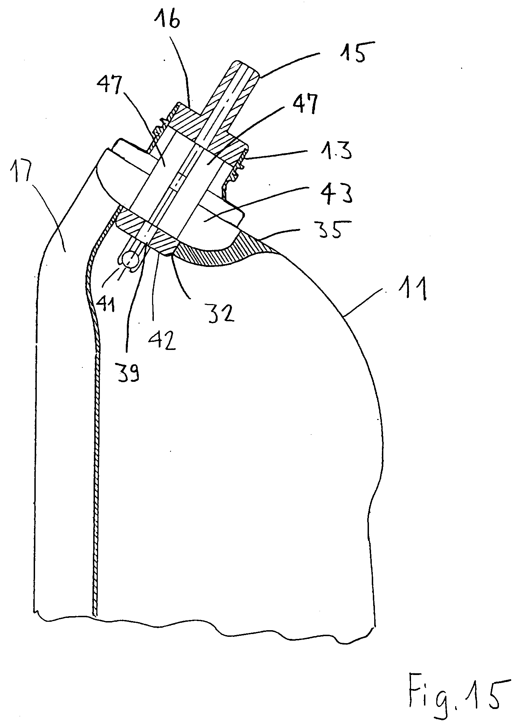

Eine vierte Ausführungsform eines Ausgussteils, welcher für eine andere Ausgestaltung der Flasche konzipiert ist, wird später mit Bezug auf Fig. 15 beschrieben.

Zum Dosieren wird die Flasche 10 aus der in Figur 11 gezeigten Lage in eine praktisch waagrechte Lage gebracht, so dass sich das Steigrohr 17 füllt. Die Flasche wird dann weiter in die in Figur 12 gezeigte Lage verschwenkt, in welcher durch Zusammendrücken der Flasche der im Steigrohr 17 befindliche Inhalt geleert werden kann. Wie ersichtlich, ist so eine Dosierung möglich. Ohne Dosieren kann Flüssigkeit auch bei aufrechtgehaltener Flasche (Figur 11) gespritzt werden.

Die Figuren 13 und 14 zeigen Flaschen mit stark abgewinkelten Stutzen 13. Dies hat den Vorteil, dass ein Dosieren für das Spritzen nach oben möglich ist. Besonders vorteilhaft ist, dass beim Spritzen nach oben auch der Flaschenkörper schräg nach oben gerichtet ist, so dass beim Reinigen der Innenränder von WC-Schüsseln die Hand des Benützers der Flasche sich ausserhalb der Schüssel befindet.

Das vierte Ausführungsbeispiel einer Quetschflasche gemäss Fig. 15 unterscheidet sich von den vorherigen Ausführungsbeispielen im wesentlichen dadurch, dass die Oeffnung 32 praktisch koaxial zum Stutzen 13 angeordnet ist, und dass diese Oeffnung 32 durch einen unteren Verschlussteil 32 des Ausgussteils 16 verschlossen ist. Dadurch wird ein Raum 43 gebildet, durch welchen Flüssigkeit aus dem Steigrohr 17 zur Ausgusstülle 15 fliessen kann. In diesem Fall setzt sich das Dosiervolumen aus dem Volumen des Steigrohrs 17 und dem Volumen des genannten Raumes 43 zusammen. Es ist aus Fig. 15 ersichtlich, dass der untere und der obere Verschlussteil 42,45, welche als Zapfen ausgebildet sein können, durch radiale Rippen 47 miteinander verbunden sind.

Im unteren Verschlussteil 42 ist eine Oeffnung 39 vorgesehen, welche durch ein Rückschlagventil 41 verschliessbar ist. Durch die Oeffnung 39 kann nach dem Quetschen der Flasche zum Spritzen von Flüssigkeit Luft in den Flaschenkörper einfliessen, so dass dieser wieder die ursprüngliche Form annimmt.

## Patentansprüche

1. Flasche, insbesondere zur Reinigung von WC-Schüsseln, mit einem Flaschenkörper, einer ersten Oeffnung (32) zum Füllen der Flasche, einer zweiten Oeffnung mit einem Ausgussteil (16), einem Dosierraum, einem einstückig mit dem Flaschenkörper ausgebildeten und zum Ausgussteil hinführenden Steigrohr (17), dessen unteres Ende (19) mit dem Innern des Flaschenkörpers kommuniziert und in Nähe des Flaschenbodens angeordnet ist, dadurch gekennzeichnet, dass der Dosierraum durch das Steigrohr (17) und eines eventuell daran anschliessenden Raums (43) gebildet ist.

2. Flasche nach Anspruch 1, dadurch gekennzeichnet, dass das Steigrohr (17) aussen am Flaschenkörper (11) angeordnet ist

3. Flasche nach Anspruch 1 oder 2, dadurch gekennzeichnet, dass das Volumen des Steigrohrs (17) und eventuell eines daran anschliessenden Raums (43) entsprechend der gewünschten Dosiermenge bemessen ist.

4. Flasche nach einem der Ansprüche 1 bis 3, dadurch gekennzeichnet, dass das Steigrohr (17) aus durchsichtigem oder durchscheinendem Material besteht.

5. Flasche nach einem der Ansprüche 1 bis 4, dadurch gekennzeichnet, dass das Steigrohr (17) eine Graduierung aufweist.

6. Flasche nach einem der Ansprüche 1 bis 5, dadurch gekennzeichnet, dass das obere Ende (31) des Steigrohrs (17) eine Oeffnung (31) des Flaschenkörpers (11) bildet.

7. Flasche nach einem der Ansprüche 1 bis 6, dadurch gekennzeichnet, dass der Flaschenkörper (11) einen Stutzen (13) aufweist, und dass die erste und/oder zweite Oeffnung (31,32) innerhalb des Stutzens (13) oder beim Fuss des Stutzens (13) angeordnet sind.

8. Flasche nach Anspruch 7, dadurch gekennzeichnet, dass das obere Ende (31) des Steigrohrs (17) praktisch koaxial zum Stutzen (13) angeordnet ist.

9. Flasche nach Anspruch 7 oder 8, dadurch gekennzeichnet, dass der Ausgussteil (16) den Stutzen (13) abschliesst und mittels eines rohrförmigen Ansatzes (29) mit dem oberen Ende (31) des Steigrohrs (17) verbunden ist.

10. Flasche nach einem der Ansprüche 1 bis 9, dadurch gekennzeichnet, dass der Ausgussteil (16) eine Ausgusstülle (15) mit einem Tropfenfänger (34) aufweist.

11. Flasche nach einem der Ansprüche 1 bis 10, dadurch gekennzeichnet, dass im Ausgussteil (16) bei der Ausgusstülle (15) mindestens eine Oeffnung (39) angeordnet ist.

12. Flasche nach Anspruch 11, dadurch gekennzeichnet, dass bei der Oeffnung (39) ein Rückschlagventil (41) angeordnet ist.

13. Flasche nach Anspruch 11, dadurch gekennzeichnet, dass die Oeffnung (39) bei der Ausgusstülle (15) schräg zur Achse (43) der Ausgusstülle (15) verläuft.

14. Flasche nach Anspruch 8, dadurch gekennzeichnet, dass die zweite Oeffnung (32) praktisch koaxial zum Stutzen (13) angeordnet ist.

15. Flasche nach Anspruch 14, dadurch gekennzeichnet, dass der Ausgussteil (16') mittels eines oberen Verschlussteils (45) den Stutzen (13) und mittels eines unteren Verschlussteils (42) die zweite Oeffnung (32) abschliesst, und dass das obere Ende (31) des Steigrohrs (17) in einen Raum (43) mündet, der zwischen dem oberen und dem unteren Verschlussteil (45,42) angeordnet ist.

16. Flasche nach Anspruch 15, dadurch gekennzeichnet, dass der untere Verschlussteil mindestens eine Oeffnung (39) aufweist.

17. Flasche nach Anspruch 15, dadurch gekennzeichnet, dass bei der Oeffnung (39) ein Rückschlagventil (41) angeordnet ist.

18. Flasche nach einem der Ansprüche 7 bis 17, dadurch gekennzeichnet, dass der Stutzen (13) ein Gewinde (12) für einen Verschluss aufweist.

19. Flasche nach einem der Ansprüche 1 bis 18, dadurch gekennzeichnet, dass sie als Quetschflasche, z.B. als Faltflasche, aus flexiblem Kunststoff ausgebildet ist.

## Claims

1. Bottle, in particular for cleaning WC bowls, comprising a bottle body, a first opening (32) for filling the bottle, a second opening with a spout part (16), a dosing space, an ascending tube (17) which is formed integrally with the bottle body and leads towards the spout part and the bottom end (19) of which communicates with the interior of the bottle body and is disposed in the vicinity of the bottle base, characterized in that the dosing space is formed by the ascending tube (17) and a space (43) optionally adjoining the latter.

2. Bottle according to claim 1, characterized in that the ascending tube (17) is disposed at the outside of the bottle body (11).

3. Bottle according to claim 1 or 2, characterized in that the volume of the ascending tube (17) and optionally of a space (43) adjoining the latter is dimensioned in accordance with the desired dosing quantity.

4. Bottle according to ode of claims 1 to 3, characterized in that the ascending tube (17) is made of transparent or translucent material.

5. Bottle according to one of claims 1 to 4, characterized in that the ascending tube (17) has a graduation.

6. Bottle according to one of claims 1 to 5, characterized in that the cop end (31) of the ascending tube (17) forms an opening (31) of the bottle body (11).

7. Bottle according to one of claims 1 to 6, characterized in that the bottle body (11) has a nozzle (13), and that the first and/or second opening (31, 32) are disposed inside the nozzle (13) or at the foot of the nozzle (13).

8. Bottle according to claim 7, characterized in that the top end (31) of the ascending tube (17) is arranged practically coaxially with the nozzle (13).

9. Bottle according to claim 7 or 8, characterized in that the spout part (16) closes the nozzle (13) and is connected by means of a tubular projection (29) to the top end (31) of the ascending tube (17).

10. Bottle according to one of claims 1 to 9, characterized in that the spout part (16) has a spout (15) with a drip collector (34).

11. Bottle according to one of claims 1 to 10, characterized in that at least one opening (39) is disposed in the spout part (16) near the spout (15).

12. Bottle according to claim 11, characterized in that a check valve (41) is disposed near the opening (39).

13. Bottle according to claim 11, characterized in that the opening (39) near the spout (15) extends obliquely relative to the axis (43) of the spout (15).

14. Bottle according to claim 8, characterized in that the second opening (32) is arranged practically coaxially with the nozzle (13).

15. Bottle according to claim 14, characterized in that the spout part (16') by means of a top closure part (45) closes the nozzle (13) and by means of a bottom closure part (42) closes the second opening (32), and that the top end (31) of the ascending tube (17) opens into a space (43), which is disposed between the top and the bottom closure part (45, 42).

16. Bottle according to claim 15, characterized in that the bottom closure part has at least one opening (39).

17. Bottle according to claim 15, characterized in that a check valve (41) is disposed near the opening (39).

18. Bottle according to one of claims 7 to 17, characterized in that the nozzle (13) has a thread (12) for a closure.

19. Bottle according to one of claims 1 to 18, characterized in that it takes the form of a squeezable bottle, e.g. a collapsible bottle, made of flexible plastic material.

## Revendications

1. Flacon, en particulier pour le nettoyage des cuvettes de W-C, comprenant un corps de flacon, une première ouverture (32) pour le remplissage du flacon, une deuxième ouverture munie d'une partie bec (16), une chambre de dosage, un tube de décharge (17) formé en une seule pièce avec le corps du flacon et qui mène à la partie bec, et dont l'extrémité inférieure (19) communique avec l'intérieur du corps du flacon et est disposée dans le voisinage du fond du flacon, caractérisé en ce que la chambre de dosage est formée par le tube de décharge (17) et une chambre (43) qui y est éventuellement raccordée.

2. Flacon selon la revendication 1, caractérisé en ce que le tube de décharge (17) est disposé extérieurement contre le corps (11) du flacon.

3. Flacon selon la revendication 1 ou 2, caractérisé en ce que le volume du tube de décharge (17) et éventuellement d'une chambre (43) qui s'y raccorde est calculé en fonction de la quantité de dosage désirée.

4. Flacon selon une des revendications 1 à 3, caractérisé en ce que le tube de décharge (17) est fait d'une matière transparente ou translucide.

5. Flacon selon une des revendications 1 à 4, caractérisé en ce que le tube de décharge (17) présente une graduation.

6. Flacon selon une des revendications 1 à 5, caractérisé en ce que l'extrémité supérieure (31) du tube de décharge (17) forme une ouverture (31) du corps (11) du flacon.

7. Flacon selon une des revendications 1 à 6, caractérisé en ce que le corps (11) du flacon présente une tubulure (13) et en ce que la première et/ou la deuxième ouverture (31, 32) sont disposées à l'intérieur de la tubulure (13) ou au niveau du pied de la tubulure (13).

8. Flacon selon la revendication 7, caractérisé en ce que l'extrémité supérieure (31) du tube de décharge (17) est disposée pratiquement coaxialement à la tubulure (13).

9. Flacon selon la revendication 7 ou 8, caractérisé en ce que la partie bec (16) ferme la tubulure (13) et est reliée à l'extrémité supérieure (31) du tube de décharge (17) au moyen d'un prolongement tubulaire (29).

10. Flacon selon une des revendications 1 à 9, caractérisé en ce que la partie bec (16) présente un ajutage de bec (15) muni d'un collecteur de gouttes (34).

11. Flacon selon une des revendications 1 à 10, caractérisé en ce qu'au moins une ouverture (39) est disposée dans la partie bec (16) dans la région de l'ajutage de bec (15).

12. Flacon selon la revendication 11, caractérisé en ce qu'un clapet anti-retour (41) est disposé dans la région de l'ouverture (39).

13. Flacon selon la revendication 11, caractérisé en ce que l'ouverture (39) prévue dans la région de l'ajutage de bec (15) s'étend obliquement à l'axe (43) de l'ajutage de bec (15).

14. Flacon selon la revendication 8, caractérisé en ce que la deuxième ouverture (32) est disposée pratiquement coaxialement à la tubulure (13).

15. Flacon selon la revendication 14, caractérisé en ce que la partie bec (16') ferme la tubulure (13) au moyen d'une partie obturatrice supérieure (45) et ferme la deuxième ouverture (32) au moyen d'une partie obturatrice inférieure (42), et en ce que l'extrémité supérieure (31) du tube de décharge (17) débouche dans une chambre (43) qui est disposée entre les parties obturatrices supérieure et inférieure (45, 42).

16. Flacon selon la revendication 15, caractérisé en ce que la partie obturatrice inférieure présente au moins une ouverture (39).

17. Flacon selon la revendication 15, caractérisé en ce qu'un clapet anti-retour (41) est disposé dans la région de l'ouverture (39).

18. Flacon selon une des revendications 7 à 17, caractérisé en ce que la tubulure (13) présente un filetage (12) pour recevoir un bouchon.

19. Flacon selon une des revendications 1 à 18, caractérisé en ce qu'il est constitué par un flacon compressible, par exemple un flacon à soufflet en matière plastique flexible.
